# FASCICULE DE BREVET EUROPEEN

(11) **EP 1 884 268 B1**
(45) Date de publication et mention de la délivrance du brevet: **08.06.2011**
(21) Numéro de dépôt: 07356098.9
(22) Date de dépôt: 25.07.2007
(51) Int. Cl.: A63C 5/12, B29C 44/12

(54) **Procédé de fabrication d'une planche de glisse**
Verfahren zur Herstellung eines Gleitbrettes
Method of manufacturing a glide board

(30) Priorité: 03.08.2006 FR 0653268
(43) Date de publication de la demande: 06.02.2008
(73) Titulaire: Skis Dynastar, 74700 Sallanches (FR)
(72) Inventeur: Perrin, M. Olivier, 74190 Passy-France (FR); Cassibba, M. Emmanuel, 74330 Sillingy (FR)
(74) Mandataire: Vuillermoz, Bruno

(56) Documents cités:
- EP-A1- 0 428 886
- EP-A2- 0 006 557
- WO-A2-2007/039696
- DE-A1- 3 120 459
- FR-A1- 2 654 645
- FR-A1- 2 683 731
- FR-A1- 2 740 719

## Description

### DOMAINE TECHNIQUE

L'invention se rattache au domaine de la fabrication des planches de glisse sur neige. Elle vise plus particulièrement les planches réalisées par un procédé d'injection permettant de réaliser un noyau à partir d'une mousse typiquement de polyuréthane. Elle vise plus spécifiquement l'utilisation de renforts textiles particuliers, adaptés aux procédés d'injection.

### TECHNIQUES ANTERIEURES

De façon générale, les planches de glisse du type ski, surf et autres sont conçues pour présenter une masse et une rigidité optimisées, et ce avec des procédés de fabrication qui sont aussi simples que possible.

Ainsi, pour donner la rigidité voulue à une planche, il est courant d'utiliser une combinaison de renforts mécaniques de diverses natures, et en particulier de textiles imprégnés de résine. Ces renforts textiles se présentent sous la forme de nappes fibreuses, en particulier de nappes de fibres de verre ou autre, uni- ou bi-directionnelles, tressées ou non, orientées selon les caractéristiques mécaniques que l'on souhaite conférer à la planche. Ces renforts sont imprégnés d'une résine en un matériau thermodurcissable ou thermoplastique, de sorte qu'ils participent à la rigidité globale de la planche.

De manière très largement répandue, les renforts textiles imprégnés le sont généralement avec une résine thermodurcissable qui est du type résine époxy, choisie pour sa bonne pénétration à l'intérieur des fibres du renfort et surtout son haut pouvoir rigidifiant.

En dehors des procédés de moulage sur un noyau préformé, en bois ou en mousse synthétique, il convient d'évoquer les procédés dits par injection *in situ,* auxquels se rattache la présente invention.

En effet, parmi les procédés connus, le plus simple consiste à réaliser un ensemble supérieur, c'est-à-dire un ensemble incluant une couche supérieure de décor et de protection associée à une couche fibreuse de renfort.

Cette couche fibreuse est imprégnée d'une résine thermodurcissable du type époxy. Cet ensemble supérieur est mis en forme indépendamment dans un moule, ce dernier étant soumis à une source de chaleur de manière à provoquer la polymérisation de la résine du renfort.

Une fois cette coque supérieure réalisée, il est ensuite procédé à l'injection de la mousse de polyuréthane dans le volume situé sous cette coque au dessus d'un ensemble inférieur, préalablement mis en place dans le moule.

Du fait que la résine du renfort est préalablement polymérisée, lorsque la mousse de polyuréthane vient à son contact, il se crée une interface au niveau de laquelle l'accrochage n'est pas de bonne qualité, voire inexistant. Il est donc nécessaire, dans ce type de procédé, d'effectuer un ponçage préalable de la face inférieure du renfort après polymérisation pour former des zones d'accroche.

D'autres procédés ont été proposés pour palier ces inconvénients, en utilisant des renforts fibreux dont la résine n'est pas totalement polymérisée, et qui polymérise donc pendant la réaction de formation de la mousse de polyuréthane du noyau.

Dans ce cas, l'ensemble supérieur est mis en place dans un moule avec un renfort qui est imprégné de résine qui se trouve dans un état non totalement polymérisé. Dans le cas où la résine est à l'état quasi brute, c'est-à-dire encore collante ou « pégueuse », elle colle naturellement à la face inférieure de la couche supérieure de protection. Dans le cas au contraire où la résine du renfort à été légèrement chauffée, celle-ci passe dans un état dit « non pégueux » qui la rend plus facilement manipulable.

Un tel procédé a en particulier été décrit dans le document EP 0 306 418. Toutefois, ce procédé n'est pas complètement satisfaisant, dans la mesure où des réactions chimiques parasites interviennent entre les composants de la mousse de polyuréthane et ceux de la résine époxy. Ces réactions parasites génèrent des zones dans lesquelles la solidarisation de la résine et de la mousse de polyuréthane n'est pas assurée, ces zones constituent des points de fragilité et de délaminage de la structure puisque le collage des différents composants de la planche n'est pas effectué.

C'est pourquoi plusieurs solutions ont été proposées pour réaliser une étanchéité entre la résine époxy du renfort et la mousse de polyuréthane du noyau. Ainsi, le document FR 2 626 521 propose d'interposer entre le renfort et la résine une feuille de papier absorbant, pour empêcher la pénétration mutuelle de la mousse de polyuréthane et de la résine époxy.

Dans une autre solution décrite dans le document EP 0 861 681, on a proposé d'interposer entre la résine et la mousse, une couche d'un matériau non tissé dont la porosité est calibrée. De la sorte, la mousse de polyuréthane ne pénètre que partiellement cette couche intermédiaire non tissée et ne parvient pas au contact de la résine époxy qui elle-même pénètre partiellement sur l'autre coté de cette couche non tissée. On conçoit qu'une des difficultés de cette solution réside dans la détermination précise de la porosité du non tissé, phénomène qu'il est difficile de contrôler de façon homogène sur toute la longueur de la planche.

Une autre solution a été décrite dans le document FR 2 854 645. Celle-ci consiste à intercaler entre les ensembles inférieurs et supérieurs une gaine étanche en matière plastique, à l'intérieure de laquelle sont injectés les constituants de la mousse de polyuréthane destinée à s'expanser. De la sorte, cette gaine réalise l'étanchéité entre l'élément fibreux de renfort imprégné de résine époxy, et la mousse de polyuréthane. Malheureusement, une telle solution présente certains inconvénients. En effet, l'étirage de la gaine en matière plastique lors de l'expansion de la mousse se traduit en pratique par des déformations aléatoires de cette gaine et par conséquent, des imprécisions dans le positionnement des éléments internes à la structure du ski. En outre, la présence d'une couche de matériaux élastomérique induit des phénomènes d'amortissement à l'intérieur de la planche qui influent sur le comportement général de la planche.

Le document FR 2683731 divulgue un procédé de fabrication identique à la demande présente mais utilisant une résine de renfort à l'état non pégueux lors de l'introduction de l'ensemble supérieur dans le moule.

L'invention vise à palier ces inconvénients.

### EXPOSE DE L'INVENTION

L'invention concerne donc un procédé de fabrication d'une planche de glisse de section transversale non rectangulaire.
Une telle planche de glisse comporte de façon classique :
- un ensemble supérieur, incluant au moins une couche supérieure de protection et un renfort fibreux imprégné d'une résine thermodurcissable ;
- un noyau à base d'une mousse de polyuréthane ;
- un ensemble inférieur incluant la semelle de la planche.

De façon classique, un procédé de fabrication enchaîne plusieurs étapes dans lesquelles tout d'abord on place dans un moule les ensembles inférieurs et supérieurs, la résine imprégnant le renfort fibreux de l'ensemble supérieur étant dans un état non polymérisé. Puis, on injecte dans l'espace compris entre les ensembles inférieurs et supérieurs un mélange réagissant pour donner une mousse de polyuréthane s'expansant.

Conformément à l'invention, la mousse thermodurcissable imprégnant le renfort fibreux est à base de polyuréthane et se trouve à l'état pégueux, et la mousse en expansion du noyau vient au contact direct du renfort.

Autrement dit, contrairement à l'art antérieur, l'invention consiste à employer pour imprégner le renfort, une résine davantage compatible chimiquement avec les composants réagissant pour donner la mousse de polyuréthane du noyau. Autrement dit, la résine d'imprégnation du renfort est de même nature que la résine constitutive du noyau. Ce faisant, les problèmes de réactions chimiques parasites sont éliminés. Bien que les propriétés mécaniques des résines de polyuréthane soient légèrement inférieures à celles des résines époxy, l'expérience montre que l'on arrive parfaitement à réaliser des planches de glisse dotées de propriétés mécaniques tout à fait acceptables. Le procédé de l'invention est toutefois largement avantageux, dans la mesure où il n'est pas nécessaire d'employer d'interface d'étanchéité entre le noyau et le renfort, et surtout qu'il apparaît des phénomènes de collage entre la résine du renfort et celle du noyau. On a observé en effet une légère pénétration de la mousse du noyau à l'intérieur du renfort. De la sorte, le renfort est fermement ancré sur le noyau, sans trop de phénomènes parasites au niveau de l'interface avec la résine qui l'imprègne.

D'autre part, par comparaison avec les procédés classiques mettant en oeuvre la résine époxy, le procédé de l'invention permet de réduire le temps de polymérisation, et en outre, la température est elle-même plus basse, comprise entre 80 et 120°C, préférentiellement voisine de 105°C.

Bien entendu l'invention couvre également les variantes dans lesquelles l'ensemble inférieur inclus un ou plusieurs renforts fibreux également imprégnés d'une résine thermodurcissable à base de polyuréthane.

Selon une autre caractéristique de l'invention, le procédé peut mettre en oeuvre une étape préalable de réalisation du renfort de l'ensemble supérieur, dans laquelle :
- on dispose de renforts fibreux sur un film, typiquement à base de polyéthylène,
- on imprègne le renfort fibreux avec une résine thermodurcissable à base de polyuréthane ;
- on recouvre le renfort d'un second film, puis on presse le renfort recouvert de ces deux films de manière à homogénéiser la distribution de résine au sein de la couche de renfort.

Par la suite, que le renfort ait été chauffé ou non, on élimine un film de manière à appliquer la face découverte du renfort sur la couche supérieure de protection.

On élimine par la suite l'autre film avant mise en place de l'ensemble supérieur dans le moule.

Avantageusement en pratique, pour faciliter les réactions de polymérisation, on peut soumettre l'ensemble du moule à une source de chaleur pendant la réaction de polymérisation du mélange constituant le noyau.

### DESCRIPTION SOMMAIRE DES FIGURES

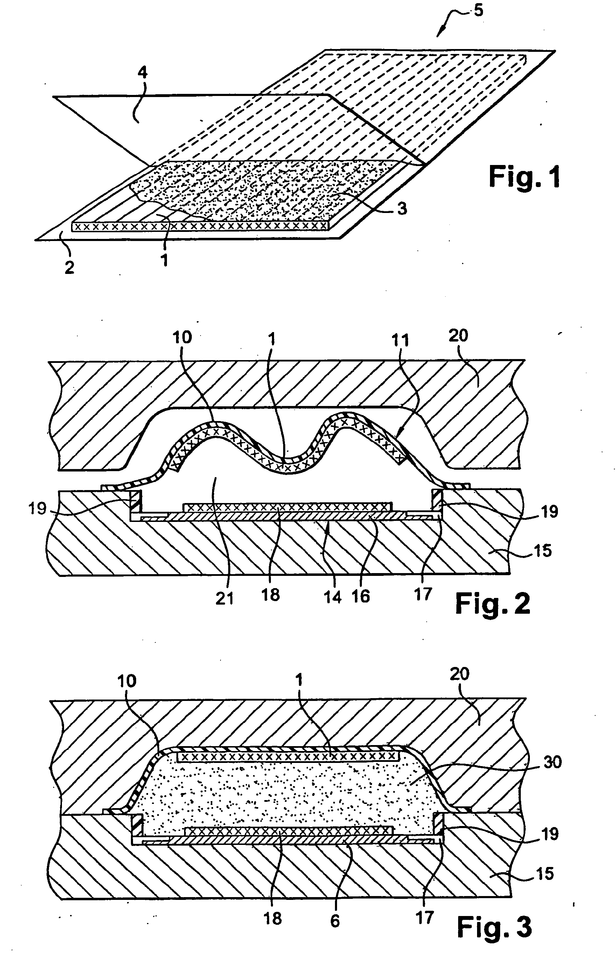

La manière de réaliser l'invention, ainsi que les avantages qui en découlent ressortiront bien de la description du mode de réalisation qui suit à l'appui des figures annexées, dans lesquelles :
■ la figure 1 est une vue en perspective sommaire d'un renfort fibreux montré au cours de l'étape d'imprégnation de résine ;
■ la figure 2 est une vue en coupe transversale d'un moule dans lequel sont mis en place les ensembles inférieurs et supérieurs ;
■ la figure 3 est une vue en coupe du même moule, montré après injection de la mousse de polyuréthane.

### MANIERE DE REALISER L'INVENTION

Le procédé conforme à l'invention comporte une première étape consistant à imprégner un renfort fibreux d'une résine thermodurcissable à base de polyuréthane. Dans cette étape, comme illustré à la figure 1, le renfort (1) est déposé tout d'abord sur un film (2) typiquement à base de polyéthylène. Le renfort reçoit alors une imprégnation d'une résine à base de polyuréthane, par une technique d'application au pinceau ou analogue. La formulation de cette résine peut être très diverse, dés lors qu'elle inclut comme composant principal des réactifs chimiques polymérisants sous forme de polyuréthane. A titre d'exemple, la résine commercialisée sous la marque BAYPREG par la société BAYER MATERIEL SCIENCE AG donne satisfaction. Lorsque cette résine est déposée sur le renfort fibreux (1), un second film (4) également en polyéthylène est appliqué sur la face apparente du renfort. L'ensemble (5) ainsi formé est soumis à une pression de manière à uniformiser l'imprégnation de la résine sur toute la surface du renfort.

A titre d'exemple, les renforts utilisés peuvent être des renforts unidirectionnels, c'est-à-dire des nappes de fils présentant un titre très important dans le sens longitudinal de la planche. Ces nappes de fils peuvent être associées soit par tissage par l'intermédiaire de fils de très faible titre, soit encore dans des opérations de couture classique.

Les fibres du renfort fibreux sont soit naturelles, soit synthétiques, telles que par exemple réalisées en carbone, verre, polyaramide (Kevlar® ), voire même une association de ces fibres.

Par la suite, le renfort (1) est associé à une couche supérieure de protection (10). Pour ce faire, le film (4) est pelé de telle manière que le renfort présente une face apparente qui peut être appliquée sur la face inférieure de la couche supérieure de protection (10). Comme la résine n'a subi aucun chauffage, elle reste dans un état suffisamment pégueux pour coller à la couche supérieure de protection (10) directement.

Par la suite, le fond du moule (15) accueille l'ensemble inférieur, formé dans la forme illustrée, de la semelle lisse (16) bordée de carres (17), et surmontée d'une autre couche fibreuse de renfort (18). Des éléments longitudinaux de renfort (19) sont également introduits pour former les chants de la future planche. Par la suite l'ensemble supérieur (11) constitué de la couche supérieure de protection (10) et du renfort (1) est mise en place au dessus du volume ouvert du moule. Le moule est ensuite fermé par son couvercle (20).

La forme ondulée de l'ensemble supérieur (10) et (11) définit, entre cet ensemble supérieur et l'ensemble inférieur, un espace (21) à l'intérieur duquel seront introduits, et se propageront, les composants qui réagiront pour former la mousse de polyuréthane.

Après injection, et comme illustré à la figure 3, ces composants réagissent en s'expansant, et par là même plaquent l'ensemble supérieur (11) contre le couvercle (20) du moule, en donnant à la planche de glisse sa forme définitive. La pression exercée par la mousse du noyau fait que cette dernière pénètre légèrement dans le renfort (1), et assure ainsi un ancrage efficace de ce dernier sur le noyau. La compatibilité chimique de la résine du noyau et de celle du renfort fait qu'il existe une continuité chimique entre le noyau et le renfort qui renforce la rigidité de l'ensemble.

Dans l'exemple de réalisation décrit, le renfort fibreux (1) peut ne pas s'étendre latéralement jusqu'aux chants (19). Cependant, dans une variante non représentée, non seulement ledit renfort fibreux peut atteindre les chants (19), mais encore, ceux-ci peuvent être escamotés, afin de constituer une structure coque, ledit renfort venant alors jusqu'aux carres (17).

Parallèlement, le renfort inférieur (18) peut également s'étendre jusqu'aux chants latéraux (19), voire même, en l'absence de ceux-ci, s'étendre sur les carres (17).

L'ensemble supérieur mis en oeuvre peut être de nature plus complexe. Il peut notamment être constitué d'une combinaison d'éléments de renfort, tels qu'une plaque métallique, un élément de renfort fibreux imprégné d'une résine thermodurcissable déjà polymérisée, et/ou un élément de renfort fibreux imprégnée d'une résine thermoplastique, outre bien sur, la résine de l'invention.

Il ressort de ce qui précède que le procédé conforme à l'invention présente l'avantage de permettre la fabrication de planches de glisse selon un procédé simple, car n'incluant pas d'intermédiaire d'étanchéité, et ce tout en conférant des propriétés de rigidité particulièrement intéressantes.

## Revendications

1. Procédé de fabrication d'une planche de glisse de section transversale non rectangulaire comportant :
- un ensemble supérieur (11) incluant au moins une couche supérieure de protection (10) et un renfort fibreux (1) imprégné d'une résine thermodurcissable ;
- un noyau (30) à base d'une mousse de polyuréthanne ;
- et un ensemble inférieur (14) incluant la semelle (6, 16) de la planche,
dans lequel :
- on place dans un moule (15, 20) l'ensemble inférieur (14) et l'ensemble supérieur (11) dans lequel la résine d'imprégnation dudit renfort fibreux est dans un état non polymérisé ;
- puis on injecte dans un espace (21) compris entre les ensembles inférieur (14) et supérieur (11) un mélange réagissant pour donner une mousse de polyuréthane s'expansant ;
***caractérisé* en ce que** la résine thermodurcissable (3) imprégnant le renfort fibreux (1) est à base de polyuréthane et, est à l'état pégueux lorsque l'ensemble supérieur (11) est introduit dans le moule, et **en ce que** la mousse en expansion du noyau vient au contact direct dudit renfort.

2. Procédé de fabrication d'une planche de glisse selon la revendication 1 ***caractérisé* en ce que** l'ensemble supérieur (11) est constitué d'une combinaison d'éléments de renfort, tels qu'une plaque métallique, un élément de renfort fibreux imprégné d'une résine thermodurcissable déjà polymérisée, et/ou un élément de renfort fibreux imprégnée d'une résine thermoplastique.

3. Procédé de fabrication d'une planche de glisse selon la revendication 1 ***caractérisé* en ce que** l'ensemble inférieur (14) inclut un renfort fibreux (18) imprégné d'une résine thermodurcissable en polyuréthane.

4. Procédé de fabrication d'une planche de glisse selon la revendication 1 ***caractérisé* en ce qu'**il comporte une étape préalable de réalisation du renfort de l'ensemble supérieur dans laquelle :
- on dispose le renfort fibreux (1) sur un film (2), typiquement à base de polyéthylène,
- on imprègne ledit renfort avec une résine à base de polyuréthane ;
- on recouvre le renfort d'un second film (4) ;
- on presse le renfort (1) recouvert des deux films (2) et (4) de manière à homogénéiser la distribution de résine au sein du renfort.

5. Procédé de fabrication d'une planche de glisse selon la revendication 1 ***caractérisé* en ce que** l'on soumet le moule à une source de chaleur pendant la réaction de polymérisation du mélange constituant le noyau (30).

## Claims

1. A method of manufacturing a gliding board having a non-rectangular cross-section comprising:
- an upper assembly (11) including at least one upper protective layer (10) and a fibre stiffener (1) impregnated with a thermosetting resin;
- a polyurethane foam-based core (30);
- and a lower assembly (14) including base (6, 16) of the board,
wherein:
- one places lower assembly (14) and upper assembly (11) in which the resin used to impregnate said fibre stiffener is in a not polymerised state in a mould (15, 20);
- then one injects a reactive mixture into the space (21) enclosed between lower assembly (14) and upper assembly (11) in order to produce an expanded polyurethane foam;
***characterised* in that** the thermosetting resin (3) used to impregnate fibre stiffener (1) is based on polyurethane and is in a tacky state when said upper assembly (11) is placed in the mould, and **in that** the expanded foam of the core comes into direct contact with said stiffener.

2. A method of manufacturing a gliding board as claimed in claim 1 ***characterised* in that** upper assembly (11) consists of a combination of reinforcing elements such as a metal plate, a fibre reinforcing element impregnated with a previously polymerised thermosetting resin and/or a fibre reinforcing element impregnated with a thermoplastic resin.

3. A method of manufacturing a gliding board as claimed in claim 1 ***characterised* in that** lower assembly (14) includes a fibre stiffener (18) impregnated with a polyurethane thermosetting resin.

4. A method of manufacturing a gliding board as claimed in claim 1 ***characterised* in that** it comprises a prior stage of producing the stiffener of the upper assembly in which:
- fibre stiffener (1) is placed on a film (2), typically a polyethylene-based film,
- said stiffener is impregnated with a polyurethane-based resin;
- the stiffener is covered with a second film (4);
- stiffener (1) covered with two films (2) and (4) is pressed in order to even out the distribution of resin in the stiffener.

5. A method of manufacturing a gliding board as claimed in claim 1 ***characterised* in that** the mould is exposed to a source of heat during the polymerisation reaction of the mixture that constitutes core (30).

## Patentansprüche

1. Verfahren zur Herstellung eines Gleitbretts mit nicht rechteckigem Querschnitt, das Folgendes aufweist:
- eine obere Einheit (11), die mindestens eine obere Schutzschicht (10) und eine mit einem wärmehärtbaren Harz getränkte Faserverstärkung (1) umfasst;
- einen Kern (30) auf Basis eines Polyurethanschaums;
- und eine untere Einheit (14), die die Gleitfläche (6, 16) des Bretts umfasst,
wobei:
- die untere Einheit (14) und die obere Einheit (11) in eine Form (15, 20) eingelegt werden, wobei sich das Tränkharz der Faserverstärkung in einem nicht polymerisierten Zustand befindet;
- dann in einen Raum (21) zwischen der unteren Einheit (14) und oberen Einheit (11) ein Gemisch eingespritzt wird, das reagiert, um einen aufschäumenden Polyurethanschaum zu ergeben;
**dadurch gekennzeichnet, dass** das wärmehärtbare Harz (3), das die Faserverstärkung (1) tränkt, auf Basis von Polyurethan und im klebrigen Zustand ist, wenn die obere Einheit (11) in die Form eingebracht wird, und dass der Schaum beim Aufschäumen des Kerns in direkten Kontakt mit der Verstärkung kommt.

2. Verfahren zur Herstellung eines Gleitbretts nach Anspruch 1, **dadurch gekennzeichnet, dass** die obere Einheit (11) aus einer Kombination von Verstärkungselementen besteht, wie etwa einer Metallplatte, einem Element aus Faserverstärkung, die mit einem bereits polymerisierten wärmehärtbaren Harz getränkt ist, und/oder einem Element aus Faserverstärkung, die mit einem thermoplastischen Harz getränkt ist.

3. Verfahren zur Herstellung eines Gleitbretts nach Anspruch 1, **dadurch gekennzeichnet, dass** die untere Einheit (14) eine Faserverstärkung (18) umfasst, die mit einem wärmehärtbaren Harz aus Polyurethan getränkt ist.

4. Verfahren zur Herstellung eines Gleitbretts nach Anspruch 1, **dadurch gekennzeichnet, dass** es einen vorläufigen Schritt zur Ausbildung der Verstärkung der oberen Einheit umfasst, in dem:
- die Faserverstärkung (1) auf einer Folie (2), typischerweise auf Basis von Polyethylen, angeordnet wird,
- die Verstärkung mit einem Harz auf Basis von Polyurethan getränkt wird;
- die Verstärkung mit einer zweiten Folie (4) bedeckt wird;
- die mit den beiden Folien (2) und (4) bedeckte Verstärkung (1) gepresst wird, um die Verteilung des Harzes im Inneren der Verstärkung zu homogenisieren.

5. Verfahren zur Herstellung eines Gleitbretts nach Anspruch 1, **dadurch gekennzeichnet, dass** die Form während der Polymerisierungsreaktion des den Kern (30) bildenden Gemischs einer Wärmequelle ausgesetzt wird.
